# EUROPÄISCHE PATENTSCHRIFT

(11) **EP 0 577 554 B1**
(45) Veröffentlichungstag und Bekanntmachung des Hinweises auf die Patenterteilung: **07.01.1999**
(21) Anmeldenummer: 93810442.9
(22) Anmeldetag: 21.06.1993
(51) Int. Cl.: C07F 7/22, C08K 5/57

(54) **Verfahren zur Herstellung von Diorganozinndicarboxylaten**
Process for the preparation of diorganotin-dicarboxylates
Procédé de préparation de dicarboxylates de diorganoétains

(30) Priorität: 30.06.1992 CH 2041/92
(43) Veröffentlichungstag der Anmeldung: 05.01.1994
(73) Patentinhaber: Witco Vinyl Additives GmbH, 68623 Lampertheim (DE)
(72) Erfinder: Fuchs, Reiner, Dr., D-6105 Ober-Ramstadt (DE); Kaufhold, Johannes, D-6145 Lindenfels (DE); Malzacher, Kornelia, D-6145 Lindenfels (DE)

(56) Entgegenhaltungen:
- EP-A- 0 446 174
- DE-A- 1 908 883
- DE-A- 2 303 179
- DE-B- 1 246 735
- FR-A- 2 314 191

## Beschreibung

Die Erfindung betrifft ein Verfahren zur Herstellung von pulverförmigen Diorganozinndicarboxylaten.

Die Herstellung von Diorganozinndicarboxylaten aus Diorganozinnoxiden und Dicarbonsäuren oder Dicarbonsäureanhydriden in Gegenwart von Lösungsmitteln ist bekannt; siehe z.B. FR-A-2 029 281, NL-A-68-18790, DE-A-1 908 883.

EP-A-446 174 lehrt ein lösungsmittelfreies Herstellungsverfahren für PVC-Stabilisatoren, die Diorganozinndicarboxylate enthalten, wobei der Reaktionsmischung Adsorbentien zugesetzt werden.

GB-A-1 043 609 beschreibt die lösungsmittelfreie Umsetzung von Dibutylzinnoxid mit Maleinsäureanhydrid bei 40 bis 50°C nach Vermischen oder Vermahlen der Ausgangsstoffe in einer Reaktionszeit von 12 h.

Gemäß DE-A-2 626 554 kann nichtstöchiometrisches Diorganozinndicarboxylat nach Vermischen von Carbonsäureanhydrid und einem Überschuß Diorganozinnoxid in Hochleistungsmischern erhalten werden, wobei die Reaktionsdauer bis zu 48 Stunden beträgt und besondere Anforderungen an das Ausgangsmaterial (Korngröße, Vorvermischung) gestellt werden.

Diese bekannten Herstellungsverfahren, die ohne Zusatzstoffe wie Lösungsmittel oder Adsorbentien auskommen, benötigen teilweise lange Reaktionszeiten und führen zu harzartigen, teilkristallinen Produkten. Zur Herstellung eines kommerziell verwendbaren Stabilisators müssen die Produkte zunächst mit zusätzlichem Zeitaufwand kristallisiert und anschließend vermahlen werden.

Nun wurde gefunden, daß sich Diorganozinnoxide mit Dicarbonsäureanhydriden oder Dicarbonsäuren überraschenderweise sehr schnell zu pulverförmigen Diorganozinndicarboxylaten umsetzen lassen, wenn bei der Reaktion eine maximale Temperatur von 70°C nicht überschritten und das entstehende Produkt unter ständiger Durchmischung abgekühlt wird. Gegenstand der Erfindung ist daher ein Verfahren zur Herstellung eines pulverförmigen Diorganozinndicarboxylates, dadurch gekennzeichnet, daß man ein Diorganozinnoxid der Formel I, 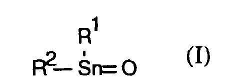 worin R¹ und R² unabhängig voneinander C₁-C₁₈-Alkyl darstellen,
bei einer Temperatur im Bereich von 45°C bis 70°C in Abwesenheit von Lösungsmitteln und Adsorbentien mit einer Dicarbonsäure der Formel II 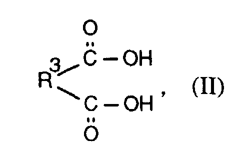 worin R³ C₁-C₁₈-Alkylen, Cycloalkylen mit 5 bis 7 Kohlenstoffatomen, Phenylen, C₁-C₁₈-Alkenylen oder mit 1 oder 2 Hydroxylgruppen substituiertes C₁-C₈-Alkylen darstellt,
oder deren Anhydrid umsetzt und Reaktionsmischung und Produkt während Reaktion und anschließender Abkühlphase ständig durchmischt.

Neben den genannten Dialkylzinnoxiden lassen sich auch solche Verbindungen der Formel I einsetzen, in denen R¹ und/oder R² C₅-C₈-Cycloalkyl, beispielsweise Cyclopentyl, bedeuten.

Vorzugsweise wird das Produkt während der Abkühlphase bis auf 40°C ständig durchmischt.
Das Produkt des erfindungsgemäßen Verfahrens ist ein rieselfähiger Feststoff. Die Korngröße des Produktes kann je nach Zusammensetzung und Verfahrensbedingungen stark variieren, beispielsweise zwischen wenigen Micrometern und einigen Millimetern, sie liegt z.B. im Bereich von 5 µm bis 5 mm, vor allem im Bereich von 50 µm bis 1 mm.

Wird in dem erfindungsgemäßen Verfahren eine Dicarbonsäure eingesetzt, so wird das bei der Reaktion entstehende Wasser zweckmäßig unter vermindertem Druck, beispielsweise bei 50 bis 300 hPa (50 bis 300 mbar), entfernt. Ein solches Verfahren unter Einsatz einer Dicarbonsäure ist bevorzugt.

Die Diorganozinnoxide entsprechen in ihrer Zusammensetzung der Formel I. Neben den Monomeren werden für die Struktur dieser Verbindungen auch Oligomere, Polymere oder dreidimensionale Kristallgitter diskutiert; zur Konstitution dieser Verbindungen s. z.B. Houben-Weyl, Methoden der Organischen Chemie, Bd. 13/6, S. 304, Thieme-Verlag, Stuttgart 1978. Im Folgenden werden Diorganozinnoxide als Verbindungen der Formel I bezeichnet, ohne auf mögliche abweichende Strukturen einzugehen.

Die bei der Reaktion von Diorganozinnoxid und Dicarbonsäure oder Dicarbonsäureanhydrid im Molverhältnis 1:1 entstehenden Diorganozinndicarboxylate können als Monomere entsprechend der Formel III 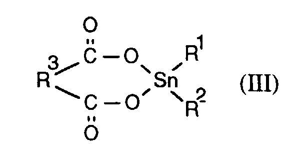 oder als Oligo- oder Polymere vorliegen, die aus wiederkehrenden Einheiten der Formel IV 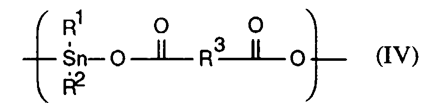 aufgebaut sind (s. z.B. R. Gächter, H. Müller, Plastics Additives Handbook, 3rd Ed., p. 285, Hanser-Verlag, München 1990; Houben-Weyl, Methoden der Organischen Chemie, Bd. 13/6, S. 440, Thieme-Verlag, Stuttgart 1978).

Ein Verfahren, bei dem an Stelle eines einheitlichen Eduktes der Formel I und eines einheitlichen Eduktes der Formel II ein Gemisch verschiedener Diorganozinnoxide und/oder Dicarbonsäuren bezw. Dicarbonsäureanhydriden eingesetzt und entsprechend ein Gemisch verschiedener Diorganozinndicarboxylate erhalten wird, bildet ebenfalls einen Gegenstand der Erfindung.

Das erfindungsgemäße Verfahren kann zu Einzelverbindungen oder auch zu Produktgemischen führen.

Im erfindungsgemäßen Verfahren können die Edukte in äquivalenten Mengen oder auch in nahezu äquivalenten Mengen (beispielsweise Molverhältnis Diorganozinnoxid:Dicarbonsäure oder -anhydrid 0,8:1 bis 1,2:1) eingesetzt werden. Ebenso möglich ist es, einen größeren Überschuß an Diorganozinnoxid der Formel I einzusetzen. Vorzugsweise werden Diorganozinnoxid und Dicarbonsäure oder Dicarbonsäureanhydrid im Molverhältnis von etwa 1:1 bis etwa 2:1 eingesetzt, wobei die Toleranz ca. 20 % beträgt. Besonders bevorzugt ist ein Verfahren, worin das Molverhältnis etwa 1:1 beträgt, d.h. die Organozinnverbindung bezogen auf die Dicarbonsäure oder deren Anhydrid in 0,9-facher bis 1,1-facher äquivalenter Menge angewendet wird.

Wird Diorganozinnoxid im Überschuß eingesetzt, so enthält das Produkt auch Einheiten der Formel V 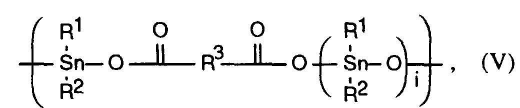 worin i eine Zahl größer als null ist, beispielsweise aus dem Bereich 1 bis 50.

Wird eine geringere als die äquivalente Menge Diorganozinnoxid eingesetzt, so enthält das Produkt Verbindungen, in denen nur eine Carboxylgruppe der Dicarbonsäure mit der Zinnverbindung verestert ist.

R¹ und R² bedeuten als C₁-C₁₈-Alkyl z.B. Methyl, Ethyl, Propyl, Isopropyl, Butyl, Isobutyl, tert-Butyl, Pentyl, Hexyl, Heptyl, Octyl, Nonyl, Decyl, Undecyl, Dodecyl, Tridecyl, Tetradecyl, Pentadecyl, Hexadecyl, Heptadecyl oder Octadecyl, vor allem C₁-C₁₂-Alkyl, z.B. n-Butyl und n-Octyl.

Bevorzugt sind R¹ und R² gleich.

Besonders bevorzugt als Diorganozinnoxid sind Dibutylzinnoxid, Dioctylzinnoxid und Dilaurylzinnoxid.

Als Reaktionspartner von Diorganozinnoxid kommen beispielsweise die folgenden Säuren bezw. deren Anhydride in Frage:
Maleinsäure, Fumarsäure, Phthalsäure, 1,2-Cyclohexandicarbonsäure, Itacon-, Mesacon- oder Glutaconsäure, Malon-, Bernstein-, Iso-dodecylbernstein-, Glutar-, Adipin-, Pimelin-, Kork-, Sebacin-, Apfel- oder Weinsäure. Bevorzugt sind Maleinsäure, Maleinsäureanhydrid, Fumarsäure, Phthalsäure, Phthalsäureanhydrid, Adipin-, Pimelin-, Kork- und Sebacinsäure; besonders Maleinsäure und Phthalsäure sowie deren Anhydride.

Mindestens eines der Ausgangsprodukte Diorganozinnoxid und Dicarbonsäure bzw. Dicarbonsäureanhydrid ist bei der Reaktionstemperatur fest. Vorzugsweise sind Diorganozinnoxid und Dicarbonsäure bzw. -anhydrid bei der Reaktionstemperatur fest.

Vorzugsweise wird im erfindungsgemäßen Verfahren ein Diorganozinnoxid der Formel I eingesetzt, worin R¹ und R² unabhängig voneinander C₄-C₁₂-Alkyl bedeuten. Besonders bevorzugt bedeuten R¹ und R² unabhängig voneinander Butyl oder Octyl.

Die im erfindungsgemäßen Verfahren eingesetzte Dicarbonsäure ist bevorzugt eine der Formel II, worin R³ C₁-C₈-Alkylen, o-Phenylen, 1,2-Cyclohexylen oder eine der Gruppen -CH=CH-, 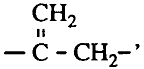 -C(CH₃)=CH-, -CH=CH-CH₂-, -CH(OH)-, -CH₂-CH(OH)- oder -CH(OH)-CH(OH)- bedeutet. Dabei kommen alle Stereoisomeren in Betracht, beispielsweise cis- oder trans-ständiges -CH=CH-; (+)- oder (-)-Äpfelsäure; meso-, (+)- oder (-)-Weinsäure, sowie Racemate. Das Anhydrid ist bevorzugt eines einer Dicarbonsäure der Formel II, worin R³ C₁-C₃-Alkylen, o-Phenylen, 1,2-Cyclohexylen oder eine der Gruppen cis- -CH=CH-, 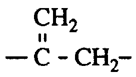 oder cis- -C(CH₃)=CH- bedeutet.

Besonders bevorzugt ist ein Verfahren, worin man eine Dicarbonsäure der Formel II einsetzt, worin R³ C₄-C₈-Alkylen, o-Phenylen, oder eine cis- oder trans-ständige Gruppe -CH=CH- bedeutet, oder als Anhydrid einer Dicarbonsäure der Formel II das Anhydrid von Maleinsäure oder Phthalsäure einsetzt.
Von besonders hervorgehobener Bedeutung ist ein Verfahren, worin man Dibutyl- oder Dioctylzinnoxid mit Maleinsäure, Phthalsäure, Maleinsäureanhydrid oder Phthalsäureanhydrid umsetzt.

Das erfindungsgemäße Verfahren wird zweckmäßig in Abwesenheit von Katalysatoren durchgeführt, insbesondere in Abwesenheit von Trockenmitteln oder Stoffen, die die Geschwindigkeit der Reaktion und/oder der Kristallisation des Produktes erhöhen aber keine stabilisierende Funktion in chlorhaltigen Polymerzusammensetzungen haben.

Besonders bevorzugt ist ein Verfahren, worin neben den Edukten der Formel I und der Formel II keine weiteren Verbindungen, Hilfs- oder Zuschlagstoffe eingesetzt werden.

Das Verfahren kann beispielsweise derart ausgeführt werden, daß die Edukte vorvermischt und anschließend in den Reaktor gefüllt werden, oder die Edukte werden nacheinander dem Reaktor zugeführt und anschließend vermischt und erhitzt. Ebenfalls möglich ist es, das Verfahren kontinuierlich zu betreiben, indem die Edukte in entsprechenden Mengen kontinuierlich dem Reaktionsteil einer geeigneten Apparatur zugeführt werden und das fertige Produkt nach Abkühlen abgezogen wird. Voraussetzung ist, daß eine ständige Durchmischung gewährleistet ist.

Als Apparaturen zur Durchführung des Verfahrens eignen sich prinzipiell alle, die die genannten Voraussetzungen bezüglich Temperierung, Durchmischung und gegebenenfalls Druckreduzierung erfüllen können. Zweckmäßig ist die Verwendung kontinuierlich arbeitender Apparaturen; dabei können sowohl solche mit einheitlichem Verweilzeitverhalten als auch solche Apparaturen verwendet werden, die typischerweise zu einer Streuung der Verweilzeit führen. Beispielsweise können beheizbare Mischer, Trockner oder Extruder als Reaktionsapparate dienen.

Beispiele für Mischer sind Mischer mit zwangsweisem Mischvorgang, V-Mischer, Eirich-Mischer, Pflugschar-Mischer, Pflugschaufel-Mischer, Paddelmischer, Zentrifugalmischer, Mischschnecken, Umlaufschneckenmischer oder Durchlaufmischer. Besonders bevorzugt sind Mischer, die evakuierbar sind.

Die Reaktion wird bevorzugt in Trocknern, die ebenfalls zweckmäßig evakuierbar sind, durchgeführt. Solche Trockner sind an sich bekannt und es kann sich z.B. um Knettrockner, Schaufeltrockner, Muldentrockner, Schneckentrockner oder Vakuumtellertrockner handeln.

Wie bereits oben beschrieben werden die einzelnen Komponenten zweckmäßig auf die der zur Anwendung gelangenden Vorrichtung zugehörige Weise in den Reaktionsbehälter, demnach den Mischbehälter oder Trocknerbehälter eingegeben. Flüssige Komponenten werden zweckmäßig durch geeignete Vorrichtungen auf die feste(n) Komponente(n) aufgesprüht.

Die Komponenten werden nach ausreichender Durchmischung auf die gewünschte Temperatur gebracht; oder, als Alternative, wird zu einer bereits temperierten Komponente oder Mischung eine weitere Komponente unter ausreichendem Durchmischen dazudosiert.

Die Umsetzung der Edukte geschieht im Temperaturbereich 45-70°C, vorzugsweise im Temperaturbereich 50-65°C, vor allem im Temperaturbereich 60-65°C.

Die mittlere Verweilzeit im Temperaturbereich 45-70°C beträgt zweckmäßig 1 bis 60 Minuten, bevorzugt 2 bis 30 Minuten.

Das Anlegen von Vakuum ist bevorzugt. Dieses liegt beispielsweise im Bereich von 1 bis 500, vorzugsweise 10 bis 500, insbesondere 50 bis 300, vor allem 50 bis 200 mbar.

Wasser als gegebenenfalls entstehendes Reaktionsprodukt wird durch den durch Temperaturerhöhung und zweckmäßig durch Druckreduktion initiierten Trocknungsprozeß entfernt. Es kann durch Kondensation innerhalb der Apparatur aufgefangen oder als Dampf abgezogen werden.

Nach der Umsetzung wird unter weiterer ständiger Durchmischung abgekühlt, vorzugsweise bis auf 40°C oder darunter.

Zweckmäßig beträgt die Gesamtverweilzeit von Edukten und Produkt während Reaktion und Abkühlphase bis auf 40°C nicht länger als 100 Minuten. Es werden beispielsweise Gesamtverweilzeiten von 1 bis 100 Minuten, vorzugsweise von 1 bis 60 Minuten, besonders von 2 bis 30 Minuten erreicht.

Die Durchmischung und die Abkühlrate werden vorteilhaft so aufeinander abgestimmt, daß sich zu keiner Zeit Klumpen oder Krusten auf Einbauten oder Wänden der Apparatur bilden; zweckmäßig kommt jedes Volumenteil der Mischung, welches größer ist als die Korngröße des Endproduktes, infolge der Durchmischung ständig mit anderen Volumenteilen in Berührung.

Die nach dem erfindungsgemäßen Verfahren erhaltenen Diorganozinndicarboxylate können zum Stabilisieren von chlorhaltigen Polymerisaten gegen den schädigenden Einfluß von Licht, Sauerstoff und/oder Wärme eingesetzt werden. Sie eignen sich beispielsweise für folgende Typen von Polymeren:
Polymere des Vinylchlorides, Vinylharze, enthaltend Vinylchlorideinheiten in deren Struktur, wie Copolymere des Vinylchlorids und Vinylester von aliphatischen Säuren, insbesondere Vinylacetat, Copolymere des Vinylchlorids mit Dienverbindungen und ungesättigten Dicarbonsäuren oder deren Anhydride, wie Copolymere des Vinylchlorids mit Diethylmaleat, Diethylfumarat oder Maleinsäureanhydrid, nachchlorierte Polymere und Copolymere des Vinylchlorids, Copolymere des Vinylchlorids und Vinylidenchlorids mit ungesättigten Aldehyden, Ketonen und anderen, wie Acrolein, Crotonaldehyd, Vinylmethylketon, Vinylmethylether, Vinylisobutylether und ähnliche; Polymere des Vinylidenchlorids und Copolymere desselben mit Vinylchlorid und anderen polymerisierbaren Verbindungen; Polymere des Vinylchloracetates und Dichlordivinylethers; chlorierte Polymere des Vinylacetates, chlorierte polymerische Ester der Acrylsäure und der alphasubstituierten Acrylsäure; Polymere von chlorierten Styrolen, zum Beispiel Dichlorstyrol; chlorierte Gummis; chlorierte Polymere des Ethylens; Polymere und nachchlorierte Polymere von Chlorbutadien und deren Copolymere mit Vinylchlorid, Gummi-Hydrochlorid und chloriertes Gummi-Hydrochlorid; sowie Mischungen der genannten Polymere untereinander.

Als chlorhaltiges Polymerisat ist Polyvinylchlorid besonders bevorzugt, insbesondere Suspensionspolymerisate, Emulsionspolymerisate und Massepolymerisate.

Darüberhinaus lassen sich die Verfahrensprodukte für weitere bekannte Verwendungszwecke von Diorganozinndicarboxylaten einsetzen; zu nennen wären hier beispielsweise der Einsatz als Katalysator für die Vernetzung von Silikonen gemäß DE-A-1223548 sowie der Einsatz als Arzneistoff für die Tumorbekämpfung gemäß EP-A-472 783.

Das erfindungsgemäße lösungsmittelfreie Verfahren weist beispielsweise die Vorteile auf, daß eine Abtrennung, Entsorgung und Wiederaufbereitung von Lösungsmitteln entfällt, sowie daß das Produkt als rieselfähiger Feststoff ohne weitere Aufbereitung als Stabilisator eingesetzt werden kann.

Die nachfolgenden Beispiele illustrieren das erfindungsgemäße Verfahren weiter. Alle Angaben in Teilen oder Prozenten beziehen sich auf das Gewicht, soweit nicht anders angegeben.

### Beispiel 1: Herstellung von Dibutylzinnphthalat aus Phthalsäureanhydrid

1,48 kg Phthalsäureanhydrid und 2,49 kg Dibutylzinnoxid werden miteinander vermischt und über einen Einfülltrichter kontinuierlich einem Doppelschnecken-Laborextruder zugeführt. Der Zylinderbereich besteht aus drei Heizzonen und einer Kühlzone. Die Temperatur des Gemisches beträgt in der Reaktionszone 63°C. Nach Durchlaufen des gekühlten Extruderteils liegt die Produkttemperatur am Austrag bei 38°C. Der Durchsatz dauert 35 min entsprechend einer mittleren Verweilzeit von 4,7 min. Als Endprodukt wird Dibutylzinnphthalat (Verbindung 1) als weißes rieselfähiges Pulver erhalten.
Analyse C₁₆H₂₂O₄ Sn: ber. 29,9 % Sn; gef. 30,0 % Sn;
chemische Verschiebung im ¹¹⁹Sn-NMR: -137,3 ppm.

### Beispiel 2: Herstellung von Dioctylzinnfumarat aus Fumarsäure

In einem absatzweise arbeitenden Knettrockner wird eine Mischung aus 6,03 kg Fumarsäure und 18,76 kg Dioctylzinnoxid unter einem Druck von 120 hPa (= 120 mbar) auf 60°C erwärmt und unter konstantem Druck und Temperatur für 20 min entwässert. Anschliessend erfolgt unter fortdauernder Durchmischung des Produktes die Abkühlung auf Raumtemperatur. Es wird Dioctylzinnfumarat (Verbindung 2) als körniger Feststoff erhalten.
Analyse C₂₀H₃₆O₄ Sn: ber. 25,9 % Sn; gef. 25,9 % Sn;
Säurezahl (titrimetrisch): 244,2 mg/g.

### Beispiel 3: Statischer Hitzetest von stabilisiertem PVC

100,0 Gewichtsteile S-PVC (K-Wert 60), 0,2 Gewichtsteile Montansäureester, 1,0 Gewichtsteile Glycerinmonooleat und 1,6 Gewichtsteile der in Tabelle 1 angegebenen Verbindung (Produkt aus Beispiel 1 oder Beispiel 2) werden 5 min bei 190°C auf einem Mischwalzwerk plastifiziert. Aus der so erhaltenen Folie (Stärke 0,2 mm) werden Prüfmuster ausgestanzt und in einem Mathis-Thermo-Takter® bei 190°C für die in Tabelle 1 angegebene Zeit thermisch belastet. Vor Beginn der thermischen Behandlung und zu den angegebenen Zeitpunkten wird der Yellowness Index (YI) gemäß ASTM D 1925-70 bestimmt. Tabelle 1 zeigt die nach der angegebenen Prüfdauer erfolgte Änderung des Yellowness Index. Der Test belegt die stabilisierende Wirkung der Produkte des erfindungsgemäßen Verfahrens.

**Tab. 1.**

| Änderung des Yellowness Index (ΔYI) der Prüfkörper nach Belastung bei 190°C | | | | |
|---|---|---|---|---|
| ΔYI bei | Dauer der Belastung / min | | | |
| | 5 | 10 | 15 | 20 |
| Verb. 1 | 0,8 | 4,0 | 16,0 | 42,4 |
| Verb. 2 | 4,4 | 11,1 | 23,2 | 31,4 |

### Beispiel 4a: Herstellung von Dibutylzinnmaleat aus Maleinsäureanhydrid

Maleinsäureanhydrid und Dibutylzinnoxid werden miteinander vermischt und gemäß Beispiel 1 in einem Doppelschnecken-Laborextruder zur Reaktion gebracht. Als Endprodukt wird Dibutylzinnmaleat (Verbindung 3) als weißes rieselfähiges Pulver erhalten.

### Beispiel 4b: Herstellung von Dibutylzinnmaleat aus Maleinsäureanhydrid

Ein Gemisch aus 2,28 kg Maleinsäureanhydrid und 5,97 kg Dibutylzinnoxid wird kontinuierlich einem Schneckentrockner zugeführt, dessen Wärmeaustauschflächen aus zwei Heiz- und einer Kühlzone bestehen. Hinter jeder Heizzone befindet sich eine Absaugeinrichtung zur Entfernung von gegebenenfalls entstehendem Reaktionswasser. Das Reaktionsgemisch durchläuft mit einer mittleren Verweilzeit von 7,5 Minuten beide Heizzonen, wobei die Temperatur der ersten 68 °C und die der zweiten Heizzone 63 °C beträgt, und wird anschließend auf 25-30 °C abgekühlt.
Am Austritt des Schneckentrockners wird Dibutylzinnmaleat (Verbindung 3) als weißes rieselfähiges Pulver erhalten.

### Beispiel 5a: Herstellung von Dioctylzinnmaleat aus Maleinsäureanhydrid

Maleinsäureanhydrid und Dioctylzinnoxid werden miteinander vermischt und gemäß Beispiel 1 in einem Doppelschnecken-Laborextruder zur Reaktion gebracht. Als Endprodukt wird Dioctylzinnmaleat (Verbindung 4) als weißes rieselfähiges Pulver erhalten.

### Beispiel 5b: Herstellung von Dioctylzinnmaleat aus Maleinsäureanhydrid

Maleinsäureanhydrid und Dioctylzinnoxid werden gemäß Beispiel 4b einem Schneckentrockner zugeführt. Am Austritt wird Dioctylzinnmaleat (Verbindung 4) als weißes rieselfähiges Pulver erhalten.

### Beispiel 5c: Herstellung von Dioctylzinnmaleat aus Maleinsäureanhydrid

Maleinsäureanhydrid und Dioctylzinnoxid werden miteinander vermischt und gemäß Beispiel 2 in einem absatzweise arbeitenden Knettrockner zur Reaktion gebracht. Als Endprodukt wird Dioctylzinnmaleat (Verbindung 4) als weißes rieselfähiges Pulver erhalten.

### Beispiel 6a: Herstellung von Dioctylzinnmaleat aus Maleinsäure

Maleinsäure und Dioctylzinnoxid werden miteinander vermischt und gemäß Beispiel 1 in einem Doppelschnecken-Laborextruder zur Reaktion gebracht. Als Endprodukt wird Dioctylzinnmaleat (Verbindung 4) als weißes rieselfähiges Pulver erhalten.

### Beispiel 6b: Herstellung von Dioctylzinnmaleat aus Maleinsäure

Maleinsäure und Dioctylzinnoxid werden gemäß Beispiel 4b einem Schneckentrockner zugeführt. Am Austritt wird Dioctylzinnmaleat (Verbindung 4) als weißes rieselfähiges Pulver erhalten.

### Beispiel 7: Herstellung von Dibutylzinnphthalat aus Phthalsäureanhydrid

Phthalsäureanhydrid und Dibutylzinnoxid werden gemäß Beispiel 4b einem Schneckentrockner zugeführt. Am Austritt wird Dibutylzinnphthalat (Verbindung 1) als weißes rieselfähiges Pulver erhalten.

### Beispiel 8: Herstellung von Dioctylzinnphthalat aus Phthalsäure

Phthalsäure und Dioctylzinnoxid werden gemäß Beispiel 4b einem Schneckentrockner zugeführt. Am Austritt wird Dioctylzinnphthalat (Verbindung 5) als weißes rieselfähiges Pulver erhalten.

### Beispiel 9: Herstellung von Dioctylzinnadipat aus Adipinsäure

Adipinsäure und Dioctylzinnoxid werden gemäß Beispiel 4b einem Schneckentrockner zugeführt. Am Austritt wird Dioctylzinnadipat (Verbindung 6) als weißes rieselfähiges Pulver erhalten.

### Beispiel 10: Herstellung von Dioctylzinnsebacat aus Sebacinsäure

Sebacinsäure und Dioctylzinnoxid werden gemäß Beispiel 4b einem Schneckentrockner zugeführt. Am Austritt wird Dioctylzinnsebacat (Verbindung 7) als weißes rieselfähiges Pulver erhalten.

## Patentansprüche

1. Verfahren zur Herstellung eines pulverförmigen Diorganozinndicarboxylates, bei dem man ein Diorganozinnoxid der Formel I, 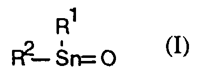 worin R¹ und R² unabhängig voneinander C₁-C₁₈-Alkyl oder C₅-C₈-Cycloalkyl darstellen, in Abwesenheit von Lösungsmitteln und Adsorbentien mit einer Dicarbonsäure der Formel II 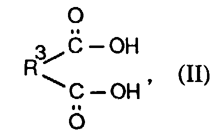 worin R³ C₁-C₁₈-Alkylen, Cycloalkylen mit 5 bis 7 Kohlenstoffatomen, Phenylen, C₁-C₁₈-Alkenylen oder mit 1 oder 2 Hydroxylgruppen substituiertes C₁-C₈-Alkylen darstellt,
oder deren Anhydrid umsetzt, dadurch gekennzeichnet, dass die Temperatur im Bereich von 45°C bis 70°C liegt und die Reaktionsmischung und das Produkt während Reaktion und anschließender Abkühlphase ständig durchmischt werden.

2. Verfahren nach Anspruch 1, dadurch gekennzeichnet, daß man ein Diorganozinnoxid der Formel I einsetzt, worin R¹ und R² unabhängig voneinander C₄-C₁₂-Alkyl bedeuten.

3. Verfahren nach Anspruch 1, dadurch gekennzeichnet, daß man ein Diorganozinnoxid der Formel I einsetzt, worin R¹ und R² unabhängig voneinander Butyl oder Octyl bedeuten.

4. Verfahren nach Anspruch 1, dadurch gekennzeichnet, daß man eine Dicarbonsäure der Formel II einsetzt, worin R³ C₁-C₈-Alkylen, o-Phenylen, 1,2-Cyclohexylen oder eine der Gruppen -CH=CH-, 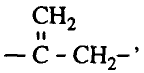 -C(CH₃)=CH-, -CH=CH-CH₂-, -CH(OH)-, -CH₂-CH(OH)- oder -CH(OH)-CH(OH)- bedeutet, oder ein Anhydrid einer Dicarbonsäure der Formel II einsetzt, worin R³ C₁-C₃-Alkylen, o-Phenylen, 1,2-Cyclohexylen oder eine der Gruppen -CH=CH-, 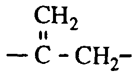 oder -C(CH₃)=CH- bedeutet.

5. Verfahren nach Anspruch 4, dadurch gekennzeichnet, daß man eine Dicarbonsäure der Formel II einsetzt, worin R³ C₄-C₈-Alkylen, o-Phenylen, oder eine cis- oder trans-ständige Gruppe -CH=CH- bedeutet, oder als Anhydrid einer Dicarbonsäure der Formel II das Anhydrid von Maleinsäure oder Phthalsäure einsetzt.

6. Verfahren nach Anspruch 1, dadurch gekennzeichnet, daß man Dibutyl- oder Dioctyl-zinnoxid mit Maleinsäure, Phthalsäure, Maleinsäureanhydrid oder Phthalsäureanhydrid umsetzt.

7. Verfahren nach Anspruch 1, dadurch gekennzeichnet, daß das Produkt während der Abkühlphase bis auf 40°C ständig durchmischt wird.

8. Verfahren nach Anspruch 1, dadurch gekennzeichnet, daß die Umsetzung im Temperaturbereich von 50-65°C durchgeführt wird.

9. Verfahren nach Anspruch 8, dadurch gekennzeichnet, daß die Umsetzung im Temperaturbereich von 60-65°C durchgeführt wird.

10. Verfahren nach Anspruch 7, dadurch gekennzeichnet, daß die Gesamtverweilzeit von Edukten und Produkt während Reaktion und Abkühlphase bis auf 40°C 100 Minuten nicht überschreitet.

11. Verfahren nach Anspruch 1, worin im Fall des Einsatzes einer Dicarbonsäure der Formel II das entstehende Reaktionswasser entfernt wird, indem der Druck auf 50 bis 300 hPa (= mbar) vermindert wird.

12. Verfahren nach Anspruch 1, dadurch gekennzeichnet, daß die Organozinnverbindung bezogen auf die Dicarbonsäure oder deren Anhydrid in 0,8-facher bis 2,2-facher äquivalenter Menge eingesetzt wird.

13. Verfahren nach Anspruch 1, dadurch gekennzeichnet, daß die Organozinnverbindung bezogen auf die Dicarbonsäure oder deren Anhydrid in 0,9-facher bis 1,1-facher äquivalenter Menge eingesetzt wird.

14. Verfahren nach Anspruch 1, welches in Abwesenheit von Katalysatoren durchgeführt wird.

15. Verfahren nach Anspruch 1, dadurch gekennzeichnet, daß neben den Edukten der Formel I und der Formel II keine weiteren Verbindungen, Hilfs- oder Zuschlagstoffe eingesetzt werden.

## Claims

1. A process for the preparation of a pulverulent diorganotin dicarboxylate, in which a diorganotin oxide of the formula I, 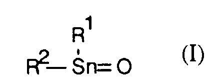 in which R¹ and R², independently of one another, are C₁-C₁₈alkyl or C₅-C₈cycloalkyl, is reacted in the absence of solvents and adsorbents with a dicarboxylic acid of the formula II 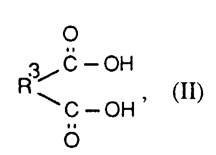 in which R³ is C₁-C₁₈alkylene, cycloalkylene having 5 to 7 carbon atoms, phenylene, C₁-C₁₈alkenylene or C₁-C₈alkylene substituted by 1 or 2 hydroxyl groups, or its anhydride, wherein the temperature is in the range from 45°C to 70°C, and the reaction mixture and the product are subjected during the reaction and the subsequent cooling phase to constant thorough mixing.

2. A process according to claim 1, wherein a diorganotin oxide of the formula I is used in which R¹ and R², independently of one another, are C₄-C₁₂alkyl.

3. A process according to claim 1, wherein a diorganotin oxide of the formula I is used in which R¹ and R², independently of one another, are butyl or octyl.

4. A process according to claim 1, wherein a dicarboxylic acid of the formula II is used in which R³ is C₁-C₈alkylene, o-phenylene, 1,2-cyclohexylene or one of the groups -CH=CH-, 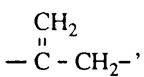 -C(CH₃)=CH-, -CH=CH-CH₂-, -CH(OH)-, -CH₂-CH(OH)- or -CH(OH)-CH(OH)-, or an anhydride of a dicarboxylic acid of the formula II is used in which R³ is C₁-C₃alkylene, o-phenylene, 1,2-cyclohexylene or one of the groups -CH=CH-, 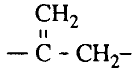 or -C(CH₃)=CH-.

5. A process according to claim 4, wherein a dicarboxylic acid of the formula II is used in which R³ is C₄-C₈alkylene, o-phenylene, or a cis- or trans- -CH=CH- group, or the anhydride of maleic acid or phthalic acid is used as the anhydride of a dicarboxylic acid of the formula II.

6. A process according to claim 1, wherein dibutyltin oxide or dioctyltin oxide is reacted with maleic acid, phthalic acid, maleic anhydride or phthalic anhyride.

7. A process according to claim 1, wherein the product is subjected during the cooling phase down to 40°C to constant thorough mixing.

8. A process according to claim 1, wherein the reaction is carried out in a temperature range of 50-65 °C.

9. A process according to claim 8, wherein the reaction is carried out in a temperature range of 60-65°C.

10. A process according to claim 7, wherein the total residence time of starting materials and product during the reaction and cooling phase down to 40°C does not exceed 100 minutes.

11. A process according to claim 1, wherein, in the case where a dicarboxylic acid of the formula II is used, the water of reaction formed is removed by reducing the pressure to 50 to 300 hPa (= mbar).

12. A process according to claim 1, wherein the organotin compound is used in 0.8 to 2.2 times the equivalent amount, relative to the dicarboxylic acid or its anhydride.

13. A process according to claim 1, wherein the organotin compound is used in 0.9 to 1.1 times the equivalent amount, relative to the dicarboxylic acid or its anhydride.

14. A process according to claim 1, which is carried out in the absence of catalysts.

15. A process according to claim 1, wherein, apart from the starting materials of the formula I and of the formula II, no further compounds, auxiliaries or additives are used.

## Revendications

1. Procédé pour la préparation de dicarboxylate de diorganoétain pulvérulent dans lequel on fait réagir un oxyde de diorganoétain de formule I, 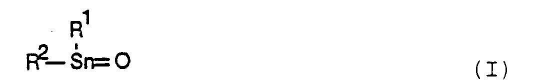 dans laquelle R¹ et R², indépendamment l'un de l'autre, représentent des groupes alkyle en C₁-C₁₈ ou cycloalkyle en C₅-C₈,
en l'absence de solvant et d'adsorbant avec un acide dicarboxylique de formule II, 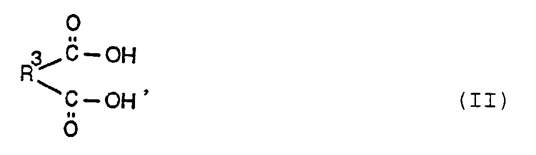 dans laquelle R³ représente des groupes alkylène en C₁-C₁₈, cycloalkylène en C₅-C₇, phénylène, alcénylène en C₁-C₁₈ ou alkylène en C₁-C₈ substitué par un ou deux groupes hydroxyle,
ou leurs anhydrides et on mélange en continu à une température de 45 à 70 °C le produit au cours de la réaction et au cours de la phase de refroidissement ultérieure.

2. Procédé selon la revendication 1, caractérisé en ce que l'on utilise un oxyde de diorganoétain de formule I dans laquelle R¹ et R², indépendamment l'un de l'autre, représentent alkyle en C₄-C₁₂.

3. Procédé selon la revendication 1, caractérisé en ce que l'on utilise un oxyde de diorganoétain de formule I dans laquelle R¹ et R², indépendamment l'un de l'autre, représentent butyle ou octyle

4. Procédé selon la revendication 1, caractérisé en ce que l'on utilise un acide dicarboxylique de formule II, dans laquelle R³ représente des groupes alkylène en C₁-C₈, o-phénylène, 1,2-cyclohexylène ou un des groupes -CH=CH-, 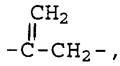 -C(CH₃) =CH-, -CH=CH-CH₂- , -CH(OH)-, -CH₂-CH-(OH)- ou -CH-(OH)-CH(OH) - ou un anhydride d'un acide dicarboxylique de formule II, dans laquelle R³ représente des groupes alkylène en C₁-C₃, o-phénylène, 1,2-cyclohexylène ou un des groupes -CH=CH-, 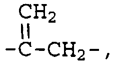 ou cis- -C(CH₃)=CH.

5. Procédé selon la revendication 4, caractérisé en ce que l'on utilise un acide dicarboxylique de formule II dans laquelle R³ représente des groupes alkylène en C₄-C₈, o-phénylène ou un groupe -CH=CH- terminal en position cis ou trans, ou en tant qu'anhydride d'un acide dicarboxylique de formule II, l'anhydride d'acide maléique ou l'anhydride d'acide phtalique.

6. Procédé selon la revendication 1, caractérisé en ce que l'on fait réagir l'oxyde de dibutylétain ou de dioctylétain avec l'acide maléique, l'acide phtalique, l'anhydride maléique ou l'anhydride phtalique.

7. Procédé selon la revendication 1, caractérisé en ce que l'on brasse en continu le produit au cours de la phase de refroidissement à 40 °C.

8. Procédé selon la revendication 1, caractérisé en ce que l'on met en oeuvre la réaction dans un intervalle de températures de 50 à 65 °C.

9. Procédé selon la revendication 8, caractérisé en ce que l'on met en oeuvre la réaction dans un intervalle de températures de 60 à 65 °C.

10. Procédé selon la revendication 7, caractérisé en ce que la durée de séjour totale des produits de départ et du produit dans la réaction et au cours de la phase de refroidissement à 40 °C ne dépasse pas 100 minutes.

11. Procédé selon la revendication 1, dans lequel dans le cas de l'utilisation d'un acide dicarboxylique de formule II on élimine l'eau de réaction formée en réduisant la pression à 50 à 300 hPa (= mbars).

12. Procédé selon la revendication 1, caractérisé en ce que l'on utilise le composé d'organoétain par rapport à l'acide dicarboxylique ou à son anhydride dans une quantité de 0,8 à 2,2 fois équivalente.

13. Procédé selon la revendication 1, caractérisé en ce que l'on utilise le composé d'organoétain par rapport à l'acide dicarboxylique ou à son anhydride dans une quantité de 0,9 à 1,1 fois équivalente.

14. Procédé selon la revendication 1 que l'on met en oeuvre en l'absence de catalyseur.

15. Procédé selon la revendication 1, caractérisé en ce que l'on n'utilise pas au côté des produits de départ de formule I et de formule II d'autres composés, des adjuvants ou des additifs.
